Europäisches Patentamt

European Patent Office

Office européen des brevets

(19)

(11) **EP 1 047 204 A2**

(12) **EUROPÄISCHE PATENTANMELDUNG**

(43) Veröffentlichungstag:
**25.10.2000 Patentblatt 2000/43**

(51) Int Cl.⁷: **H04B 3/23**

(21) Anmeldenummer: **00440104.8**

(22) Anmeldetag: **14.04.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **19.04.1999 DE 19917658**

(71) Anmelder: **ALCATEL**
**75008 Paris (FR)**

(72) Erfinder: **Matt, Hans Jürgen, Dr.**
**71686 Remseck (DE)**

(74) Vertreter: **Müller, Joachim, Dipl.-Ing. et al**
**Alcatel**
**Intellectual Property Department, Stuttgart**
**Postfach 30 09 29**
**70449 Stuttgart (DE)**

(54) **Testsignal zur Messung der Echoimpulsantwort während des Verbindungsaufbaus**

(57) Ein Verfahren zur Echounterdrückung bei TK-Verbindungen, wobei Testsignale vom Leitungsende eines rufenden nahen Teilnehmers oder einem Echocanceller in einer Vermittlungsstelle bis zum Leitungsende eines gerufenen fernen Teilnehmers ausgesendet und dadurch bewirkte Leitungsechos vom Echocanceller detektiert und in entsprechende Koeffizienten für einen konvergierenden Echounterdrückungsalgorithmus umgerechnet werden, ist dadurch gekennzeichnet, daß die Testsignale zur Ermittlung der Leitungsechos vom Echocanceller in Richtung des gerufenen fernen Teilnehmers in einem Zeitabschnitt während des Verbindungsaufbaus und vor Beginn eines Gesprächs (=prior to off-hook) ausgesendet werden, insbesondere vor dem Abheben des Endgeräts durch den gerufenen fernen Teilnehmer. Damit kann zum frühest möglichen Zeitpunkt eine optimale Anfangseinstellung und mithin eine besonders schnelle Konvergenz des verwendeten Echounterdrückungsalgorithmus erreicht werden, wobei akustische Störungen des gerufenen fernen Teilnehmers aufgrund der Testsignale vermieden werden und dennoch beliebige, möglicherweise auch akustisch unangenehm empfundene Testsequenzen zur schnellen Konvergenz des Echounterdrückungsalgorithmus eingesetzt werden können.

Fig. 1

**Beschreibung**

Die Erfindung betrifft ein Verfahren zur Echounterdrückung bei Telekommunikations- (=TK) -Verbindungen, beispielsweise Telefongesprächen, wobei Testsignale, insbesondere eine synthetische Folge von Testimpulsen, vom Leitungsende eines rufenden nahen Teilnehmers oder einem Echocanceller in einer Vermittlungsstelle bis zum Leitungsende eines gerufenen fernen Teilnehmers ausgesendet und die Echo-Impulsantwort gemessen wird, indem die dadurch bewirkten Leitungsechos vom Echocanceller detektiert und in entsprechende Koeffizienten für einen konvergierenden Echounterdrückungsalgorithmus umgerechnet werden.

Ein solches Verfahren ist bekannt aus der WO 93/09611.

Bei der Übertragung von Sprachsignalen auf Telekommunikationsleitungen können einerseits z.B. am "nahen Ende" bei dem aussendenden Benutzer akustische Echos aufgrund der direkten Schallübertragung vom Lautsprecher zum Mikrofon des Endgerätes entstehen. Insbesondere bei mehreren räumlich benachbart angeordneten Endgeräten, beispielsweise in einem Büro- oder Konferenzraum mit vielen Telefonanschlüssen, verschärft sich das Nahecho-Problem erheblich, da eine Kopplung von jedem Lautsprechersignal auf jedes Mikrofon erfolgt. Ein in der EP 0 627 825 A2 vorgeschlagenes Vielkanal-Echo-Unterdrükkungsverfahren und die zugehörige elektronische Schaltung sollen hier Abhilfe schaffen.

Neben dem nahen akustischen Echo gibt es aber auch ein ggf. aus unterschiedlich vielen Teilechos zusammengesetztes elektrisches Leitungsecho aufgrund von Reflexionen der ausgesendeten Sprachsignale an unterschiedlich entfernten Stellen im Übertragungskanal, beispielsweise bei 2-4-Drahthybriden (Gabelschaltungen) im Endgerät bzw. in Vermittlungsstellen und an Netzübergängen zwischen analogen und digitalen Netzen.

In heutigen Telefonnetzen können nahezu beliebig verschiedenen Signallaufzeiten zwischen einem Sprecher an einem (nahen) Leitungsende und einem anderen Sprecher an einem (fernen) Leitungsende auftreten. Der kleinste zeitliche Wert, den ein Signal benötigt, um von einem Ort A zu einem Ort B zu gelangen (Signal-Laufzeit), ist meist durch den Quotienten aus der kürzesten Entfernung und der Lichtgeschwindigkeit c bestimmt. Auf Kupfer- und Glasfaserkabeln ist die elektrische Energie (Licht-)Geschwindigkeit $c' \approx 2 \cdot 10^8$ m/s < c = $3 \cdot 10^8$ m/s im Vakuum.

Bei kleinen Entfernungen sind die Signallaufzeiten meist sehr gering (1 km $\hat{=}$ 5 μs) wogegen sie bei großen Entfernungen - besonders bei Übergragung über geostationäre Satelliten in einer Entfernung von 36000 km ($\hat{=}$ 240 ms) über der Erde - mehrere hundert ms betragen.

Weitere Verzögerungszeiten entstehen, wenn Kompressionseinrichtungen die Sprach-, Audio- bzw. Bildsignale vor dem Aussenden komprimieren und am Empfangsort wieder dekomprimieren müssen. Auf diese Weise können bei Sprachübertragung Signallaufzeiten im Bereich von Millisekunden bis Sekunden zusammenkommen.

Signallaufzeiten von > 30 ms machen sich bei Sprache sehr unangenehm bemerkbar, wenn elektrische Echos der Sprache von der anderen Seite kommend den Sprecher stören. In diesen Fällen muß man Echo-Unterdrücungseinrichtungen einsetzen, damit die Sprachverbindung eine akzeptable Qualität behält.

Unter normalen Umständen wird im Bereich von lokalen Vermittlungseinrichtungen für Telefonie keine Echo-Unterdrükkung benötigt, da die Entfernungen kurz und damit Echos nicht störend sind. Erst beim Übergang in Fernvermittlungsstellen, z.B. auf interkontinentalen Strecken, ist ein Einsatz von Echo-Cancellern nötig. Die Echo-Canceller werden üblicherweise nur auf der Fernstrecke eingesetzt. Damit wird ihre Zahl auf die Anzahl der Fernleitungen reduziert, die viel kleiner ist, als die der Telefonteilnehmer im lokalen Bereich. Nachteilig ah diesem Konzept ist, daß vom Teilnehmer (wo die meisten elektrischen Echos an den 2-Draht/ 4-Draht-Übergängen entstehen) bis hin zur Fernvermittlung bereits Signallaufzeiten bis zu etwa 100 ms und mehr entstehen können.

Definitionsgemäß sieht eine Echo-Unterdrükkungseinrichtung in Richtung von einer Fervermittlungsstelle aus hin zum lokalen Teilnehmer üblicherweise sogenannte "NahbereichsEchos" ($t$ < 128 ms), in Richtung zum fernen Teilnehmer u.U. sogenannte "Fernbereichs-Echos" (100 ms < $t$ < 700 ms).

Die Netzwerkbetreiber sind bestrebt, möglichst alle "Nahbereichs-Echos" zu eliminieren. Würde dies überall auf der Welt ausgeführt, so würde beim Zusammenschalten großer Netze kein Fernbereichs-Echo mehr auftreten. Da dies aber nicht in allen Ländern der Fall ist, wird auch relativ häufig eine Einrichtung zum Unterdrückung von Fernbereichs-Echos benötigt.

Auf den Übertragungsstrecken treten die Echos meist innerhalb eines zeitlich eng begrenzten Rahmens von < 64 ms auf. Diese Echos lassen sich mit Hilfe von adaptiven FIR Filtern nachbilden und vom echobehafteten Signal abziehen.

Dazu wird beispielsweise in der EP 0 792 029 A2 eine Echounterdrückungseinrichtung mit adaptivem Filter vorgeschlagen, die einen groben und einen feinen Detektor für Nahend-Sprachsignale umfaßt, welche beidseits der Echounterdrükkungseinrichtung angeordnet sind und somit das ankommende Signal vor und nach der Echounterdrückung beobachten können. In Sprachpausen vom nahen Ende soll damit eine Anpassung des Echokompensators an reflektierte Echosignale vorgenommen werden.

In der DE 44 30 189 A1 ist ein kostengünstiges Verfahren vorgeschlagen, das bei unterschiedlichen akustischen Bedingungen einsetzbar ist, und bei dem ein FIR-Filter eingesetzt wird, dessen Filterkoeffizienten nach dem NMLS-Algorithmus bestimmt werden. Zur Echounterdrückung in einem TK-Netz mit einer Vielzahl von parallelen Kanälen wird nach dieser Methode für jeden Kanal ein derartiger Echounterdrücker mit adaptivem FIR-Filter eingesetzt, der z.B. auf einem digitalen Signalprozessor in Software realisiert ist. Das adaptive FIR-Filter soll dabei das zu erwartende, möglicherweise aus mehreren Einzelechos bestehende Gesamtecho nachbilden und von dem an das TK-Endgerät übertragene, mit dem Echo behaftete Nutzsignal abziehen.

Neben dem oben beschriebenen Verfahren der Ausfilterung nachgebildeter Echosignale ist eine weitere, technisch einfacher zu realisierendere Methode der Echounterdrückung bekannt, nämlich das sogenannte "Compander-Prinzip". Dabei wird in einer Estimatorschaltung die Echokopplung eines Leitungsechos sowie seine Verzögerungszeit abgeschätzt und bei einer entsprechenden Absenkung des kurzzeitigen Empfangspegels in Sprachpausen mittels einer Kennlinien-Schaltung der Ausgangspegel derart abgesenkt, daß das ankommende Leitungsecho und eventuelle Hintergrundgeräusche effektiv unterdrückt werden. Es erfolgt dabei kein genereller Echoabzug vom ankommenden Nutzsignal im Empfangspfad, sondern lediglich eine "Maskierung" des Echos in den Sprachpausen durch entsprechende kurzzeitige Absenkung des Ausgangspegels. Während einer der beiden Teilnehmer spricht, also bei Vorliegen eines hohen Eingangspegels, wird der Ausgangspegel durch entsprechende Verschiebung der Kennlinien-Schaltung im oberen Bereich gehalten, da dann das wesentlich schwächere Echo unter dem hohen Pegel des Sprachsignals "versteckt" ist und sich nicht störend auswirkt. Dieses Compander-Prinzip ist beispielsweise in der DE 37 24 346 A1 beschrieben.

Alle diese bekannten Verfahren sind relativ kompliziert, zeitaufwendig und erfordern auf der Vorrichtungsseite recht komplex aufgebaute Echokompensatoren, auf der Softwareseite aufwendige, komplizierte, störungsanfällige Betriebsprogramme, die viel Speicheraufwand und viel Rechenleistung benötigen.

Aus der eingangs zitierten WO 93/09611 schließlich ist ein Verfahren zur Konvergenz eines Echocancellers bei Beginn eines Telefonanrufs bekannt, in welchem ein in einer Vermittlungsstelle integrierter Echocanceller aktiviert wird, sobald das Abheben (off-hook state) des gerufenen fernen Teilnehmers detektiert wird. Daraufhin sendet der Echocanceller ein Testsignal auf die Verbindungsleitung der beiden Teilnehmer, um eine Messung der Echo-Impulsantwort durchzuführen und eine Konvergenz des verwendeten Echounterdrückungsalgorithmus vor dem Erscheinen von Sprachsignalen zu bewirken. Zusätzlich wird in der WO 93/09611 auch die Möglichkeit der Absendung eines Testsignals in Richtung auf den rufenden nahen Teilnehmer zwischen den Klingeltönen beim Verbindungsaufbau beschrieben.

Nachteilig bei beiden beschriebenen Verfahrensvarianten ist die Störung entweder des rufenden oder des gerufenen Teilnehmers durch die Testsignale, die ja im abgehobenen Zustand jeweils das entsprechende Endgerät erreichen. Außerdem braucht die bekannte Prozedur eine gewisse Zeit, bevor der Echounterdrückungsalgorithmus die Echo-Impulsantwort aus den ermittelten Testechosignalen überhaupt berechnet hat, welche dann nach einer gewissen Rechenzeit zur Konvergenz des Algorithmus führen.

Aufgabe der vorliegenden Erfindung ist es demgegenüber, ein Verfahren mit den eingangs genannten Merkmalen dahingehend zu verbessern, daß zu einem möglichst frühen Zeitpunkt eine optimale Anfangseinstellung und damit eine besonders schnelle Konvergenz des verwendeten Echounterdrückungsalgorithmus erreicht werden kann, wobei akustische Störungen des gerufenen fernen Teilnehmers aufgrund der Testsignale vermieden werden sollen und dennoch beliebige, möglicherweise auch akustisch unangenehm empfundene Testsequenzen zur schnellen Konvergenz des Echounterdrückungsalgorithmus eingesetzt werden können.

Erfindungsgemäß wird diese Aufgabe auf ebenso überraschend einfache wie wirkungsvolle Art und Weise dadurch gelöst, daß die Testsignale zur Ermittlung der Leitungsechos vom Echo-canceller in Richtung des gerufenen fernen Teilnehmers in einem Zeitabschnitt während des Verbindungsaufbaus und vor Beginn eines Gesprächs (=prior to off-hook) ausgesendet werden, insbesondere vor dem Abheben des Endgeräts durch den gerufenen fernen Teilnehmer.

Da die Testsignale zur Echomessung an das gerufene ferne Leitungsende während des Aufbaus der TK-Verbindung schon vor Beginn des Gesprächs, als vor dem Abheben des Endgeräts am fernen Ende ausgesendet werden, ist eine Beeinträchtigung des gerufenen fernen Teilnehmers durch unangenehme Geräusche aufgrund der synthetischen Testimpulse ausgeschlossen. Daher können beliebige Arten von Testsignalen verwendet werden, die ansonsten unzumutbare akustische Störungen beim gerufenen Teilnehmer hervorrufen würden.

Außerdem können aufgrund des erfindungsgemäßen Timings mit den ausgesendeten Testsignalen zum frühestmöglichen Zeitpunkt während des Aufbaus der Verbindung die zu erwartenden Leitungsechos ermittelt werden, was zu einer optimal schnellen Konvergenz des Echounterdrückungsalgorithmus beiträgt, so daß sowohl der Hardwareaufbau des Echocancellers als auch die Software-mäßige Ausgestaltung des Verfahrens bei gleicher Echounterdrückungsqualität einfacher gehalten werden können, bzw. mehrere Kanäle von einer DSP bedient werden können.

Ein weiterer Vorteil des erfindungsgemäßen Verfahrens schließlich liegt darin, daß die gebührenfreie Zeitspanne während des Erfindungsaufbaus und vor dem Abheben des Endgeräts am gerufenen fernen Ende nunmehr zusätzlich zur Informationsgewinnung für die Einstellung des Echocancellers genutzt wird.

Besonders bevorzugt ist eine Ausführungsform des erfindungsgemäßen Verfahrens, bei der zusätzlich im Zeitabschnitt während des Verbindungsaufbaus eine Messung der Signalverzögerungszeit über den Leitungsabschnitt zwischen dem Echocanceller und dem gerufenen fernen Teilnehmer durchgeführt und die gemessene Verzögerungszeit zum Zwecke einer schnelleren Konvergenz beim Echounterdrückungsalgorithmus berücksichtigt wird.

Bei einer besonders vorteilhaften Weiterbildung dieser Ausführungsform wird die gemessene Signalverzögerungszeit zur statistischen Auswertung und Verzögerungsvoreinstellung von Echounterdrückungsmaßnahmen bei weiteren Verbindungen im gleichen, vorzugsweise gerichteten Leitungsbündel verwendet. Sind in einer Fernvermittlungsstelle mehrere gerichtete Leitungsbündel zu verschiedenen Zielen (z.B. anderen Kontinenten) vorhanden, so kann in einem Speicherbereich der Vermittlungsstelle die zu jedem Ziel gehörende Grundverzögerung inkl. Verteilungsfunktion und typischen Koeffizientensatz gespeichert werden. Werden im Zuge eines Netzwerksmanagements die Leitungsbündel erweitert oder zu neuen Zielen umgeschaltet, so können den Echocancellern dieser Leitungsbündel die richtigen Grundverzögerungswerte gleich mitgegeben werden. Dadurch wird die erfindungsgemäß gewonnene Information bei nachfolgenden TK-Verbindungen besonders effektiv ausgenutzt.

Bei einer weiteren, besonders bevorzugten Variante des erfindungsgemäßen Verfahrens ist vorgesehen, daß die TK-Verbindung zwischen dem rufenden nahen und dem gerufenen fernen Teilnehmer eine Fernverbindung ist, die über eine Vermittlungsstelle am rufenden nahen Ende und eine weitere Vermittlungsstelle am gerufenen fernen Ende aufgebaut wird, und daß mindestens eine der beiden beteiligten Vermittlungsstellen einen Echocanceller aufweist. Gerade die sogenannten "Fernechos", die in einem Zeitrahmen bis 1 Sekunde an den Sprecher zurückkommen, werden aufgrund des Zeitversatzes als besonders störend empfunden, da der Sprecher unterdessen in seiner Rede merklich fortgefahren ist, wenn sein eigenes reflektiertes Sprechsignal wieder bei ihm ankommt. Eine effektive Echounterdrückung bei Fernverbindungen, wie sie beispielsweise bei Verbindungen über interkontinentale Leitungen, Tiefseekabel oder Satelliten bewirkt werden, ist daher besonders wichtig.

Eine häufig anwendbare Variante der obigen Ausführungsform des erfindungsgemäßen Verfahrens, die vor allem Fernverbindungen zwischen technisch hochentwickelten Industriestaaten betrifft, zeichnet sich dadurch aus, daß beide Vermittlungsstellen einen Echocanceller aufweisen, und daß vor Gesprächsbeginn die Vermittlungsstelle am gerufenen fernen Ende Testsignale zur Ermittlung und Kompensation der fernen lokalen Echos in Richtung auf den gerufenen fernen Teilnehmer und die Vermittlungsstelle am rufenden nahen Ende Testsignale zur Ermittlung und Kompensation der nahen lokalen Echos in Richtung auf den rufenden nahen Teilnehmer aussendet. Damit kann der gesamte Verbindungspfad vom rufenden zum gerufenen Endgerät sowohl auf Nahechos als auch auf Fernechos zwischen den beiden Vermittlungsstellen untersucht und eine effektive Unterdrückung sämtlicher lokal auftretender Echos an beiden Enden bewirkt werden.

Bei einer alternativen Verfahrensvariante ist vorgesehen, daß nur die Vermittlungsstelle am rufenden nahen Ende einen Echocanceller aufweist und vor Gesprächsbeginn zur Ermittlung und Kompensation der Fernechos Testsignale in Richtung auf den gerufenen fernen Teilnehmer aussendet. Dies ist typischerweise bei TK-Verbindungen zwischen einem hochindustrialisierten Land und einem Entwicklungsland der Fall, da in letzterem meist noch keine aktiven Echounterdrückungsmaßnahmen für TK-Verbindungen vorgehalten werden. Zur Unterdrückung von Fernechos muß daher bei dieser Verfahrensvariante die Vermittlungsstelle am rufenden nahen Ende die erfindungsgemäßen Maßnahmen durchführen.

Bevorzugt ist eine Weiterbildung dieser Verfahrensvariante, bei der die Vermittlungsstelle am rufenden nahen Ende vor Gesprächsbeginn zur Ermittlung und Kompensation der nahen lokalen Echos auch Testsignale in Richtung auf den rufenden nahen Teilnehmer aussendet. Damit können zusätzlich die Nahechos zwischen der Vermittlungsstelle und dem rufenden nahen Teilnehmer ermittelt und effektiv unterdrückt werden.

Bei einer weiteren alternativen Variante der oben beschriebenen Ausführungsform des erfindungsgemäßen Verfahrens ist vorgesehen, daß nur die Vermittlungsstelle am gerufenen fernen Ende einen Echocanceller aufweist und vor Gesprächsbeginn zur Ermittlung und Kompensation der fernen lokalen Echos Testsignale in Richtung auf den gerufenen fernen Teilnehmer aussendet. Diese Verfahrensvariante wird dann einzusetzen sein, wenn eine Fernverbindung zwischen einem technisch schwach ausgerüsteten Entwicklungsland und einem Industrieland aufgebaut werden soll. Damit kann der bei Vermittlungsstellen in hochindustrialisierten Ländern überlicherweise vorhandene Echocanceller zumindest die Nahechos zum gerufenen fernen Teilnehmer ermitteln und unterdrücken.

Besonders zu bevorzugen ist aber eine Weiterbildung dieser Verfahrensvariante, bei der die Vermittlungsstelle am gerufenen fernen Ende vor Gesprächsbeginn zur Ermittlung und Kompensation auch der Fernechos Testsignale in Richtung auf den rufenden nahen Teilnehmer aussendet. Auf diese Weise kommt sowohl der rufende nahe Teilnehmer als auch der gerufene ferne Teilnehmer in den Genuß einer optimalen Echounterdrückung.

Das erfindungsgemäße Verfahren kann aber auch mit Erfolg in solchen Fällen eingesetzt werden, wo die TK-Verbindung zwischen dem rufenden nahen und dem gerufenen fernen Teilnehmer eine Nahverbindung ist, die vorzugsweise über lediglich eine einzige Vermittlungsstelle aufgebaut wird, wenn mindestens eines der beteiligten Endgeräte eine Signalverzögerung bedingt. Die durch die Signalverzögerung bedingten Echoeffekte können wiederum auf erfindungsgemäße Weise effektiv ermittelt und bequem beseitigt werden.

Eine häufig anwendbare Weiterbildung dieser Verfahrensvariante zeichnet sich dadurch aus, daß die Vermittlungsstelle einen Echocanceller aufweist und vor Gesprächsbeginn zur Ermittlung und Kompensation der lokalen Echos Testsignale sowohl in Richtung auf den gerufenen fernen Teilnehmer als auch in Richtung auf den rufenden nahen Teilnehmer aussendet.

Eine alternative Weiterbildung kann aber auch darin bestehen, daß an eines der beteiligten Endgeräte, insbesondere über eine Telefonanlage, ein Echocanceller angeschlossen ist, der vor Gesprächsbeginn zur Ermittlung und Kompensation der Echos auf der Verbindungsstrecke Testsignale in Richtung auf den anderen Teilnehmer aussendet.

Signalverzögerungen der obengenannten Art können beispielsweise auftreten, wenn die TK-Verbindung zwischen dem rufenden und dem gerufenen Teilnehmer eine Kurzstreckenverbindung mit simultaner Bildübermittlung ist. Hier kann das erfindungsgemäße Verfahren mit großem Erfolg zur Reduzierung störender Echos eingesetzt werden, wenn die Tonsignale aus Gründen einer Lippensynchronisation zum komprimierten Bild künstlich verzögert werden müssen.

Bei einem anderen Einsatzfall kann mindestens eines der an der Verbindung beteiligten Endgeräte ein Funkendgerät sein, in welchem eine Komprimierung der auszusendenden Sprachsignale vorgenommen wird. Auch hier läßt sich das erfindungsgemäße Verfahren mit großem Erfolg einsetzen.

Weitere Vorteile der Erfindung ergeben sich aus der Beschreibung und den Zeichnungen. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand eines Ausführungsbeispiels näher erläutert. Es zeigen:

Fig. 1   eine schematische Darstellung einer Fernverbindung über zwei Vermittlungsstellen mit jeweils einem eigenen Echocanceller;

Fig. 2   die Situation einer Fernverbindung, bei der nur die Vermittlungsstelle am rufenden nahen Ende über einen Echocanceller verfügt;

Fig. 3   die Situation einer Fernverbindung, bei der lediglich die Vermittlungsstelle am gerufenen fernen Ende über einen Echocanceller verfügt; und

Fig. 4   die schematische Darstellung von Kurzstreckenverbindungen, bei denen sinnvoll vom erfindungsgemäßen Verfahren Gebrauch gemacht werden kann.

Bei dem Aufbau von TK-Verbindungen in Telefonnetzen wird nach bzw. während des Wahlvorganges der eigentliche Verbindungsweg abschnittsweise von Vermittlung zu Vermittlung durchgeschaltet, bis die Leitung zum gewünschten Teilnehmer angeschaltet ist. Dieser Zustand wird von dem Telefonnetz erkannt, d.h. von der letzten rufenden Vermittlungsstelle. Danach sendet sie ein Klingelzeichen an den gerufenen Fernsprechapparat und gleichzeitig einen "Freiton" bzw. ein "Freizeichen" an die rufende Station zurück. Erst wenn der gerufene Teilnehmer abhebt kommt das Gespräch zustande.

Bei diesem Vorgang bis zum Abheben durch den gerufenen fernen Teilnehmer gibt es zwei besondere Zeitabschnitte:

- einen ersten Zeitabschnitt, in dem die abschnittsweise Durchschaltung des Verbindungsweges erfolgt und sodann

- einen zweiten Zeitabschnitt, in dem das Klingelzeichen an die gerufene Station und das Freizeichen an die rufende Station gegeben wird.

Die beiden Zeitabschnitte können sehr unterschiedliche zeitliche Dauer haben. So ist die Dauer des ersten Zeitabschnitts in der Regel abhängig davon, ob eine mit mechanischen Kontakten arbeitende Vermittlungsstelle oder eine vollelektronische Vermittlungsstelle den Weg zum gerufenen fernen Teilnehmer durchschaltet. Die Dauer des zweiten Zeitabschnittes hängt davon ab, wann der gerufene ferne Teilnehmer das Telefon abhebt. In beiden Fällen betragen diese Zeitabschnitte mindestens 50 ... 100 ms bis zu ein paar Sekunden.

Diese bis heute ungenutzten Zeiträume werden von der Erfindung folgendermaßen ausgenutzt: Erfindungsgemäß wird in dem ersten und/oder in dem zweiten Zeitabschnitt eine synthetische Signalfolge, z. B. ein Dirac-Impuls oder ein analoges Rauschsignal oder ein Fingerprint-Signal, oder eine digitale Pseudo-Rausch-Folge oder andere (binäre oder höherwertige) spezielle Codefolgen, die besonders gute Autokorrelations-Eigenschaften haben, vom Echocanceller in Richtung zum gerufenen fernen Teilnehmer ausgesendet. Gleichzeitig sucht auf der entsprechenden Empfangsleitung der Echocanceller nach einem Echo von diesem ausgesendeten Signal, indem er die empfangenen Signale auf das ausgesendete Signal hin z.B. mit einem Korrelator oder einer anderen "Fingerprint-Sucheinrichtung" untersucht.

Die bei einer ersten Messung M1 gefundenen Laufzeiten T1 = (t1, t2, ... tn) der gefundenen Echosignale und deren dazugehörigen Amplitudenwerte jedes einzelnen Echos A1 = (a1, a2, a3, ... an) stellen die Echo-Impulsantwort des Kanals dar; sie werden als eine erste Näherung für den Filter-Koeffizientensatz zwischengespeichert.

Die Messung der Impulsantwort wird periodisch wiederholt (M1, M2, M3, ...) bis das "Freizeichen" um zweitenmal (erstenmal, oder ...) erkannt wurde.

Die Meßwerte (M2) einer zweiten Messung werden mit den Meßwerten der ersten Messung (M1) zunächst verglichen indem ein Maß "s" für die Abweichung der neuen Werte von den Werten der vorausgegangenen Messung bestimmt wird.

$$(1) \qquad s^2 = b0\ [(A2) - (A1)]^2$$

für alle Zeitpunkte $t_j$

Wenn der Wert für s kleiner als eine vorgegebene Schranke ist, werden die Meßwerte (M2) mit den Meßwerten (M1) gemittelt und ergeben der Wertesatz (Mm). Wenn der Wert s größer als die vorgegebene Schranke ist, wird der Satz (M2) kurzzeitig als Sonderwert (Ms) zwischengespeichert. Ein großer Wert von s deutet auf eine Fehlmessung oder eine plötzliche Änderung der Echos im Telefonkanal hin.

Allgemein gilt: Zu jeder neuen Messung [Mi = (Ai), (Ti)] wird zunächst der Wert s gegenüber dem gemittelten und gespeicherten Meßwertsatz (Mm) bestimmt:

$$(2) \qquad s^2 = b0\ [(Ai) - (Am)]^2$$

für alle Zeitpunkte $t_j$

Wenn der Wert für s kleiner als die vorgegebene Schranke ist, werden die Meßwerte mit dem vorherigen gemittelten Meßwertsatz weiterhin gemittelt gemäß

$$(3) \qquad (Am)_i = (1\text{-ci})\ (Ai) + ci(Am)_{i-1};$$

mit ci = 1/i; für alle Zeitpunkte $t_j$

Wenn der Wert s größer als die vorgegebene Schranke ist, wird der Satz (Mi) kurzzeitig als Sonderwert (Ms) zwischengespeichert, wenn noch kein anderer Wertesatz (Ms) gespeichert ist. Der Wert i wird dann nicht weitergezählt.

Ist bereits ein vorheriger Wertesatz als (Ms) gespeichert, so wird zunächst der Wert von s zwischen (Mi) und (Ms) ermittelt. Ist dieser Wert s kleiner als die vorgegebene Schwelle, so deutet dies darauf hin, daß sich die Parameter der Echos plötzlich geändert haben.

In diesem Fall wird der Wertesatz (Mm) mit dem Wertesatz (Ms) überschrieben, das Register (Ms) gelöscht, die Zählvariable i = 2 gesetzt und damit der Wertesatz (Mi) = (M2) normal behandelt, d.h. zum Wertesatz (Mm) = (M1) gemittelt hinzugefügt.

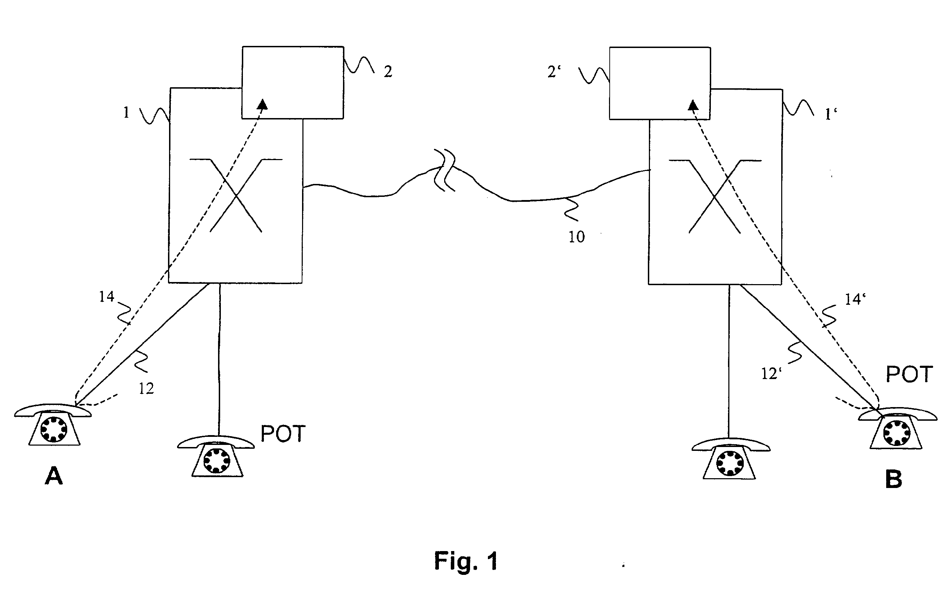

In Fig. 1 ist schematisch eine Fernverbindung zwischen einem rufenden nahen Teilnehmer A und einem gerufenen fernen Teilnehmer B über eine digitale Fernverbindungsstrecke 10 bzw. ein gerichtetes Leitungsbündel dargestellt, wobei die Verbindung über eine Vermittlungsstelle 1 am rufenden nahen Ende, an die der rufende nahe Teilnehmer A mit einer Teilnehmeranschlußleitung 12 angeschlossen ist, sowie über eine weitere Vermittlungsstelle 1' am gerufenen fernen Ende, an die der gerufene ferne Teilnehmer B mit einer Teilnehmeranschlußleitung 12' angeschlossen ist, aufgebaut wird.

Beide Vermittlungsstellen 1, 1' verfügen jeweils über einen Echocanceller 2, 2', mit dem jeweils das entsprechende lokale Echo über den jeweiligen Nahechopfad 14, 14' ermittelt und kompensiert werden kann.

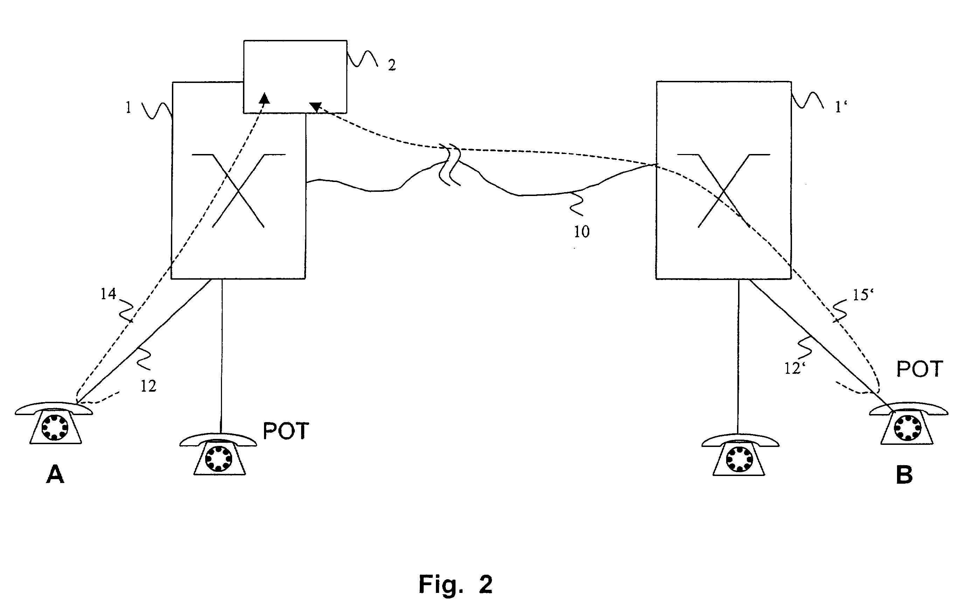

Im Beispiel von Fig. 2, wo für vergleichbare Vorrichtungen dieselben Bezugsziffern wie in Fig. 1 verwendet sind, verfügt lediglich die Vermittlungsstelle 1 am rufenden nahen Ende über einen Echocanceller 2. Vor Gesprächsbeginn ermittelt und kompensiert daher der Echocanceller 2 das nahe lokale Echo über den Nahechopfad 14 und zusätzlich das Fernecho über den Fernechopfad 15' zum gerufenen fernen Teilnehmer B.

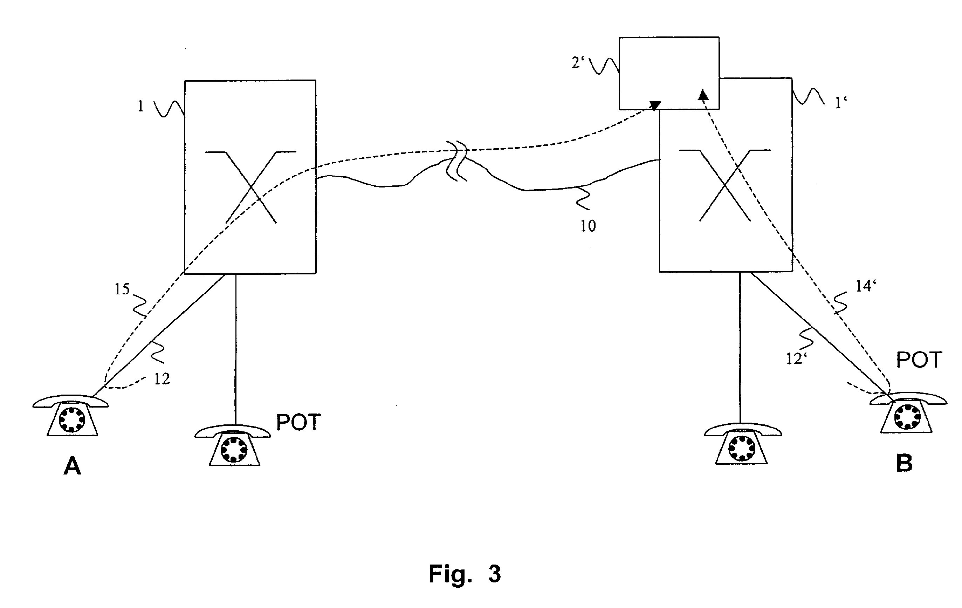

Genau umgekehrt ist die Situation in Fig. 3, wo lediglich die Vermittelungsstelle 1' am gerufenen fernen Ende über einen Echocanceller 2' verfügt, und daher vor Gesprächsbeginn das ferne lokale Echo über den Nahechopfad 14' am gerufenen fernen Ende sowie das Fernecho zum rufenden Teilnehmer A über den Fernechopfad 15 ermittelt und kompensiert.

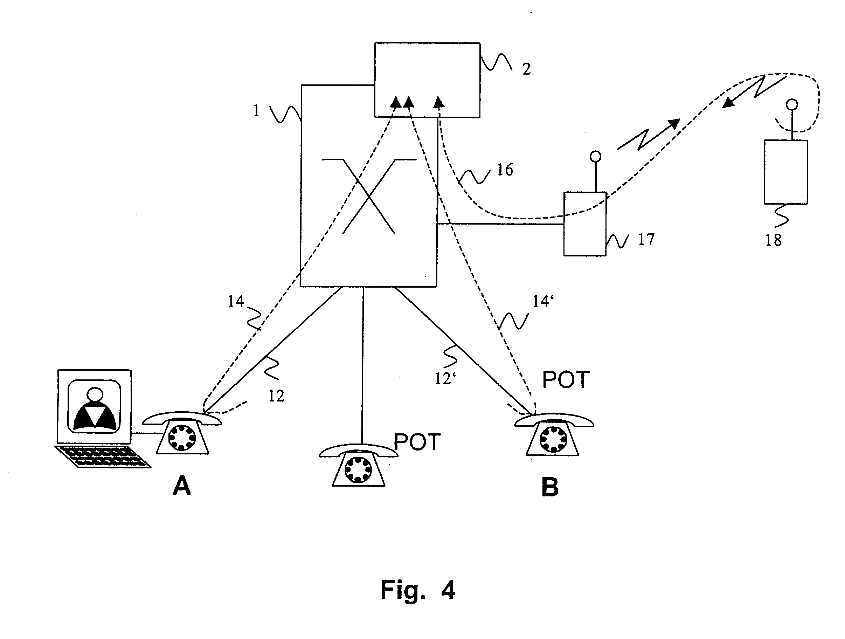

Fig. 4 schließlich stellt eine Situation dar, bei der die TK-Verbindung zwischen dem rufenden nahen Teilnehmer A und dem gerufenen Teilnehmer B eine Nahverbindung ist, die im gezeigten Ausführungsbeispiel lediglich über eine einzige Vermittlungsstelle 1 mit dem zugeordneten Echocanceller 2 aufgebaut wird. Auch in diesem Fall ist eine Echounterdrükkung wünschenswert, wenn nämlich eines der beteiligten Endgeräte eine Signalverzögerung bedingt. Dies ist beispielsweise der Fall, wenn ein Endgerät, wie hier für den rufenden nahen Teilnehmer A dargestellt, neben den Sprachsignalen auch simultan Bildsignale übermittelt. Der Echocanceller 2 kompensiert dann die beiden lokalen Nahechos auf den Nahechopfaden 14 und 14'.

Zusätzlich ist eine Konstellation dargestellt, bei der eines der beiden beteiligten Endgeräte ein Funkendgerät 18 ist, in welchem eine Komprimierung der auszusendenden Sprachsignale vorgenommen wird. Dadurch tritt auf dem Echopfad 16 der Funkverbindung, der von der Vermittlungsstelle 1 über eine Funkbasisstation 17 zum Funkendgerät 18 verläuft, eine erhebliche zeitliche Verzögerung der Sprachsignale auf. In diesem Fall kompensiert der Echocanceller 2 außer dem lokalen Nahecho auf dem Nahechopfad 14 auch das Echo auf dem Echopfad 16 der Funkverbindung.

Anstelle des Echocancellers 2 in der Vermittlungsstelle 1 können die genannten Echos aber auch jeweils durch in der Zeichnung nicht dargestellte Echocanceller, die mindestens einem der beteiligten Endgeräte zugeordnet sind, ermittelt und kompensiert werden.

**Patentansprüche**

1. Verfahren zur Echounterdrückung bei Telekommunikations-(=TK)-Verbindungen, beispielsweise Telefongesprächen, wobei Testsignale, insbesondere eine synthetische Folge von Testimpulsen, vom Leitungsende eines rufenden nahen Teilnehmers oder einem Echocanceller in einer Vermittlungsstelle bis zum Leitungsende eines gerufenen fernen Teilnehmers ausgesendet und dadurch bewirkte Leitungsechos vom Echocanceller detektiert und in entsprechende Koeffizienten für einen konvergierenden Echounterdrükkungsalgorithmus umgerechnet werden,
dadurch gekennzeichnet,
daß die Testsignale zur Ermittlung der Leitungsechos vom Echocanceller in Richtung des gerufenen fernen Teilnehmers in einem Zeitabschnitt während des Verbindungsaufbaus und vor Beginn eines Gesprächs (=prior to off-hook) ausgesendet werden, insbesondere vor dem Abheben des Endgeräts durch den gerufenen fernen Teilnehmer.

2. Verfahren nach Anpruch 1, dadurch gekennzeichnet, daß zusätzlich im Zeitabschnitt während des Verbindungsaufbaus eine Messung der Signalverzögerungszeit über den Leitungsabschnitt zwischen dem Echocanceller und dem gerufenen fernen Teilnehmer durchgeführt und die gemessene Verzögerungszeit zum Zwecke einer schnelleren Konvergenz beim Echounterdrückungsalgorithmus berücksichtigt wird.

3. Verfahren nach Anpruch 2, dadurch gekennzeichnet, daß die gemessene Signalverzögerungszeit zur statistischen Auswertung und Verzögerungsvoreinstellung von Echounterdrückungsmaßnahmen bei weiteren Verbindungen im gleichen, vorzugsweise gerichteten Leitungsbündel verwendet wird.

4. Verfahren nach einem der vorhergehenden Anprüche, dadurch gekennzeichnet, daß die TK-Verbindung zwischen dem rufenden nahen und dem gerufenen fernen Teilnehmer eine Fernverbindung ist, die über eine Vermittlungsstelle am rufenden nahen Ende und eine weitere Vermittlungsstelle am gerufenen fernen Ende aufgebaut wird, und daß mindestens eine der beiden beteiligten Vermittlungsstellen einen Echocanceller aufweist.

5. Verfahren nach Anpruch 4, dadurch gekennzeichnet, daß beide Vermittlungsstellen einen Echocanceller aufweisen, und daß vor Gesprächsbeginn die Vermittlungsstelle am gerufenen fernen Ende Testsignale zur Ermittlung und Kompensation der fernen lokalen Echos in Richtung auf den gerufenen fernen Teilnehmer und die Vermittlungsstelle am rufenden nahen Ende Testsignale zur Ermittlung und Kompensation der nahen lokalen Echos in Richtung auf den rufenden nahen Teilnehmer aussendet.

6. Verfahren nach Anpruch 4, dadurch gekennzeichnet, daß nur die Vermittlungsstelle am rufenden nahen Ende einen Echocanceller aufweist und vor Gesprächsbeginn zur Ermittlung und Kompensation der Fernechos Testsignale in Richtung auf den gerufenen fernen Teilnehmer aussendet.

7. Verfahren nach Anpruch 6, dadurch gekennzeichnet, daß die Vermittlungsstelle am rufenden nahen Ende vor Gesprächsbeginn zur Ermittlung und Kompensation der nahen lokalen Echos Testsignale in Richtung auf den rufenden nahen Teilnehmer aussendet.

8. Verfahren nach Anpruch 4, dadurch gekennzeichnet, daß nur die Vermittlungsstelle am gerufenen fernen Ende einen Echocanceller aufweist und vor Gesprächsbeginn zur Ermittlung und Kompensation der fernen lokalen Echos Testsignale in Richtung auf den gerufenen fernen Teilnehmer aussendet.

9. Verfahren nach Anpruch 8, dadurch gekennzeichnet, daß die Vermittlungsstelle am gerufenen fernen Ende vor Gesprächsbeginn zur Ermittlung und Kompensation der Fernechos Testsignale in Richtung auf den rufenden nahen Teilnehmer aussendet.

10. Verfahren nach einem der Anprüche 1 bis 3, dadurch gekennzeichnet, daß die TK-Verbindung zwischen dem rufenden nahen und dem gerufenen fernen Teilnehmer eine Nahverbindung ist, die vorzugsweise über lediglich eine Vermittlungsstelle aufgebaut wird, und daß mindestens eines der beteiligten Endgeräte eine Signalverzögerung bedingt.

11. Verfahren nach Anpruch 10, dadurch gekennzeichnet, daß die Vermittlungsstelle einen Echocanceller aufweist und vor Gesprächsbeginn zur Ermittlung und Kompensation der lokalen Echos Testsignale sowohl in Richtung auf den gerufenen fernen Teilnehmer als auch in Richtung auf den rufenden nahen Teilnehmer aussendet.

**12.** Verfahren nach Anpruch 10, dadurch gekennzeichnet, daß an eines der beteiligten Endgeräte, insbesondere über eine Telefonanlage, ein Echocanceller angeschlossen ist, der vor Gesprächsbeginn zur Ermittlung und Kompensation der Echos auf der Verbindungsstrecke Testsignale in Richtung auf den anderen Teilnehmer aussendet.

**13.** Verfahren nach einem der Anprüche 10 bis 12, dadurch gekennzeichnet, daß die TK-Verbindung zwischen dem rufenden nahen und dem gerufenen fernen Teilnehmer eine Kurzstreckenverbindung mit simultaner Bildübermittlung ist.

**14.** Verfahren nach einem der Anprüche 10 bis 12, dadurch gekennzeichnet, daß mindestens eines der an der Verbindung beteiligten Endgeräte ein Funkendgerät ist, in welchem eine Komprimierung der auszusendenden Sprachsignale vorgenommen wird.

Fig. 1

EP 1 047 204 A2

**Fig. 2**

Fig. 3

**Fig. 4**